# EUROPEAN PATENT APPLICATION

(11) **EP 4 227 084 A1**
(43) Date of publication of application: **16.08.2023**
(21) Application number: 21877430.5
(22) Date of filing: 29.09.2021
(51) Int. Cl.: B32B 25/10

(54) **CONDUCTIVE RUBBER-COATED CLOTH**

(30) Priority: 07.10.2020 JP 2020169663
(71) Applicant: NOK Corporation, Tokyo 105-8585 (JP)
(72) Inventor: HAYASHI Taisei, Tsujido-Shinmachi, Fujisawa-shi, Kanagawa 251- 0042 (JP); KUBO Masayuki, Tsujido-Shinmachi, Fujisawa-shi, Kanagawa 251- 0042 (JP); HAYASHI Takahiro, Tsujido-Shinmachi, Fujisawa-shi, Kanagawa 251- 0042 (JP)
(74) Representative: Global IP Europe Patentanwaltskanzlei
(86) International application number: PCT/JP2021/035753
(87) International publication number: WO 2022/075129

(57) **Abstract**

Provided is an electroconductive rubberized fabric that can be used as a bioelectrode and that suppresses an increase in an electric resistance value. An electroconductive rubberized fabric 1 includes: an electroconductive base fabric layer 2 formed of an electroconductive base fabric 4 and including a first electroconductive base fabric layer surface 2a; and an electroconductive rubber layer 3 formed by superimposing electroconductive rubber 5 on the first electroconductive base fabric layer surface 2a.

## Description

### FIELD

The present disclosure relates to an electroconductive rubberized fabric. More specifically, the present disclosure relates to an electroconductive rubberized fabric that can be used as a bioelectrode capable of stably detecting a weak biosignal.

### BACKGROUND

Conventionally, medical devices such as an electrocardiogram, an electroencephalograph, or an electromyograph have been used in medical fields. Such a medical device captures, as a biosignal, fluctuation in an electric potential generated from a human body, and displays the captured biosignal. Thereby, a health condition or the like can be recognized. In recent years, wearable information devices such as an active tracker (activity amount meter) have widely spread among people who take care of health. The wearable information device is attached to an arm, a wrist, or the like, and can collect any of various kinds of daily bioinformation by measuring a body temperature, a heart rate, a blood pressure, or the like over time, measuring an activity amount such as a walking distance, the number of steps, or the like, or measuring sleep duration, or a depth or quality of sleep, or the like, for example.

Another technique whose development is being widely advanced is that in which a biosignal consequent on operation or movement of a driver is detected to operate and control a car navigation system or any of various on-vehicle devices mounted on an automobile. Thereby, the biosignal can be reflected in safe driving or the like. For example, an accident is prevented, or a driver is notified of danger in advance.

Thus, many developments for various electronic devices such as wearable information devices and on-vehicle devices are underway concerning detection and measurement techniques of sensors and the like for accurately detecting a biosignal generated by a human body. Particularly, performance improvement of a bioelectrode attached directly to a human body is expected for highly accurately detecting a change in a weak biosignal.

The bioelectrode is attached to a part of a body surface such as skin of a human body, for example. The bioelectrode captures a change in an amount of electric current or the like as a biosignal flowing in the body surface or an inside of the human body. In this case, for example, electroconductive rubber is often used in order to detect a weak biosignal.

However, the electroconductive rubber itself has a disadvantage such as low mechanical strength. For this reason, a problem such as easy tearing or breaking of the electroconductive rubber can occur. The problem is caused by excessive external force applied to the electroconductive rubber at the time of impact application when the electroconductive rubber is used as the bioelectrode or at the time of manufacturing the bioelectrode (e.g., at the time of sewing). Thus, when the electroconductive rubber is used as the bioelectrode, improvement in durability of the bioelectrode is required.

For example, the electroconductive rubber and woven cloth (fabric) are stuck integrally to each other, using a well-known forming-processing technique such as calender forming. This results in formation of an electroconductive rubberized fabric (hereinafter, referred to as "two-layer structure electroconductive rubberized fabric") having a two-layer structure in which the electroconductive rubber and the woven cloth are superimposed on each other. Thereby, a biosignal can be satisfactorily detected by the electroconductive rubber, and mechanical strength can be improved by the woven cloth. Thus, the two-layer structure electroconductive rubberized fabric having superior mechanical strength can be adopted as the bioelectrode.

An electroconductive rubberized woven cloth known as another example of the bioelectrode is formed by impregnating an insulating fabric with an electroconductive material and then providing a wiring, an electrode, and the like (refer to Japanese Patent Application Laid-open Publication No. 2014-151018). In addition, a known stretchable electrode and wiring sheet that have stretchability include woven cloth as base materials to which an electrode and a wiring are connected using electroconductive rubber (refer to International Publication No. WO2016/114298).

### BRIEF SUMMARY

### TECHNICAL PROBLEM

When the two-layer structure electroconductive rubberized fabric is used as the bioelectrode, the following problem can occur.

The insulating woven cloth having a property of preventing electricity from passing therethrough and the electroconductive rubber having a property of allowing electricity to passing therethrough are stuck to each other. Thereby, the two-layer structure electroconductive rubberized fabric is integrally formed. For this reason, the insulating woven cloth can cause an overall electric resistance value of the two-layer structure electroconductive rubberized fabric to become larger than that when the electroconductive rubber is used alone. As a result, detection accuracy of a biosignal can be lowered, and a change in a weak biosignal cannot be detected. In other words, there is a possibility that sufficient performance for the bioelectrode cannot be exhibited.

Specifically, the bioelectrode formed of the two-layer structure electroconductive rubberized fabric is used in a part of a seat, an armrest, or a steering wheel of an automobile, for operation and control of an on-vehicle device installed in a vehicle interior of the automobile. Thereby, a bioinformation (biosignal) of a driver is acquired. In this case, the bioelectrode itself is generally formed in an elongated shape in many cases.

The bioelectrode itself is electrically connected via a metal terminal to a wiring extending from the on-vehicle device or the like. However, there is a possibility that an electric resistance value in the elongated bioelectrode becomes high, due to influence of the insulating woven cloth, at an electrode face in the bioelectrode that is distant from the metal terminal connected to the wiring. Then, it can become difficult for electric current to flow in an amount enough to be captured as a biosignal. Thus, detection accuracy of a change in a weak biosignal at the electrode face can decline.

A conceivable measure to solve such a problem is, for example, to increase the number of metal terminals attached to the bioelectrode, thereby preventing an increase in a distance from the metal terminal to the electrode face. However, an increase in the number of the installed metal terminals causes the bioelectrode itself to become bulky, and a mounting position thereof is restricted. In addition, visual quality of the bioelectrode itself deteriorates, and aesthetic appearance of the vehicle interior where the bioelectrode is installed is impaired. Further, an increase in the number of the installed metal terminals causes an increase in cost. Furthermore, for example, when a large number of accessories such as the metal terminals are attached to the steering wheel, steerability of the steering wheel itself can decline.

An object of the present disclosure is to provide an electroconductive rubberized fabric that can be used as a bioelectrode and that can suppress an increase in an electric resistance value and prevent a decline in detection accuracy of a weak biosignal.

### SOLUTION TO PROBLEM

An electroconductive rubberized fabric according to a first aspect of the present disclosure includes:
an electroconductive base fabric layer formed of an electroconductive base fabric and including a first electroconductive base fabric layer surface; and
an electroconductive rubber layer formed by superimposing electroconductive rubber on the first electroconductive base fabric layer surface.

### ADVANTAGEOUS EFFECTS

An electroconductive rubberized fabric according to the present disclosure can be used as a bioelectrode, and can suppress an increase in an electric resistance value and prevent a decline in detection accuracy of a weak biosignal.

### BRIEF DESCRIPTION OF DRAWINGS

FIG. 1 is an illustration depicting a schematic configuration of an electroconductive rubberized fabric according to an embodiment.
FIG. 2 is a sectional view taken along the line A-A' in FIG. 1.
FIG. 3 is a sectional view depicting a schematic configuration of an electroconductive rubberized fabric according to a comparative example 1.
FIG. 4 is a sectional view depicting a schematic configuration of an electroconductive rubberized fabric according to a comparative example 2.
FIG. 5 is an illustration depicting a schematic configuration for a method of measuring an electric resistance value of the electroconductive rubberized fabric.
FIG. 6 is an illustration depicting one example of a wiring method at the time of measuring an electric resistance value of the electroconductive rubberized fabric.

### DETAILED DESCRIPTION

The following describes an embodiment of an electroconductive rubberized fabric according to the present disclosure in detail with reference to the drawings. The electroconductive rubberized fabric according to the embodiment is not limited to the below-described ones. Various design changes, modifications, and improvements, and the like can be made without departing from the essence of the present disclosure.

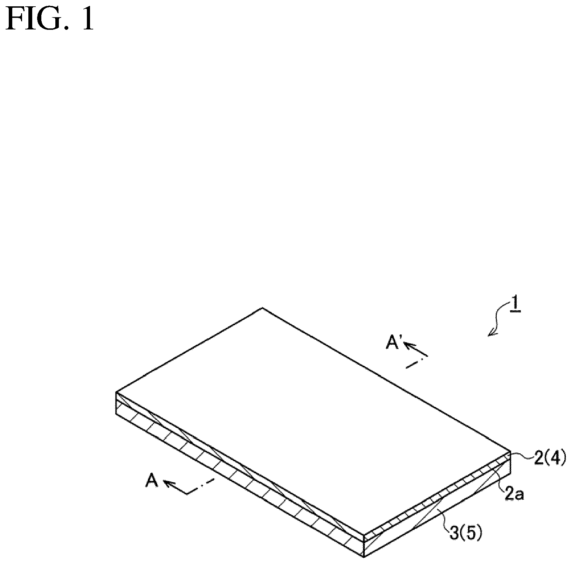

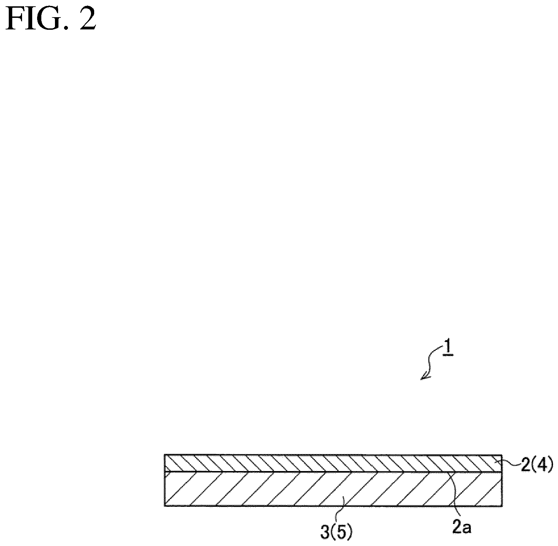

The electroconductive rubberized fabric 1 according to the embodiment includes an electroconductive base fabric layer 2 and an electroconductive rubber layer 3, as illustrated in FIG. 1 and FIG. 2. The electroconductive rubberized fabric 1 has a two-layer structure in which the two layers are superimposed on each other.

FIG. 1 is an illustration of a schematic configuration of the electroconductive rubberized fabric 1 according to the embodiment. FIG. 2 is a sectional view taken along the line A-A' in FIG. 1.

The electroconductive rubberized fabric 1 according to the embodiment includes the electroconductive base fabric layer 2 and the electroconductive rubber layer 3, as illustrated in FIG. 1 and FIG. 2. The electroconductive base fabric layer 2 is formed of an electroconductive base fabric 4. The electroconductive rubber layer 3 is formed of electroconductive rubber 5 that contacts against the entirety of a first electroconductive base fabric layer surface 2a of the electroconductive base fabric layer 2.

The electroconductive rubberized fabric 1 according to the embodiment is a two-layer structure electroconductive rubberized fabric constituted by the electroconductive base fabric layer 2 and the electroconductive rubber layer 3. The base fabric 4 constituting the electroconductive base fabric layer 2 in the embodiment has electroconductivity. Here, the base fabric 4 includes, as a base, a polyester fiber or the like. For example, a surface of the polyester fiber has been plated with metal. Thereby, the base fabric 4 itself is also imparted with electroconductivity.

The electroconductive rubber layer 3 is the electroconductive rubber 5 that has been formed, by roll forming or the like, in a sheet shape having a predetermined thickness, as illustrated in FIG. 1 and FIG. 2. The electroconductive rubber 5 as an unvulcanized rubber material is, for example, heated and pressed between a plurality of rolls while being extruded onto the first electroconductive base fabric layer surface 2a. Thus, the electroconductive base fabric layer 2 and the electroconductive rubber layer 3 are formed integrally with each other by, for example, calender forming of sticking the electroconductive rubber layer 3 to the electroconductive base fabric layer 2 while forming the electroconductive rubber layer 3.

Here, a method for manufacturing the electroconductive rubberized fabric 1 is not limited to that in which the electroconductive rubber layer 3 is stuck to the electroconductive base fabric layer 2 while being formed. For example, the electroconductive rubber layer 3 formed in a sheet shape in advance may be stuck to the electroconductive base fabric layer 2, using an electroconductive adhesive, by a well-known bonding technique or the like. In this case, the adhesive is preferably applied to an entire surface between the electroconductive base fabric layer 2 and the electroconductive rubber layer 3. In addition, a forming-processing technique other than the calender forming may be used.

A size of the electroconductive rubberized fabric 1 is not particularly limited. In the case of assumed use as a bioelectrode or the like, the entirety of the two layers including the electroconductive base fabric layer 2 and the electroconductive rubber layer 3 has, for example, a thickness approximately in a range from 0.1 mm to 10 mm, more preferably a thickness approximately in a range from 0.3 mm to 1 mm. The electroconductive rubberized fabric 1 formed as an elongated body has a length equal to or longer than 50 mm.

Such a size of the electroconductive rubberized fabric 1 enables suppression of an increase in an electric resistance value, and enables accurate detection of a biosignal, even for an electrode face separated from a metal terminal.

The base fabric 4 used for the electroconductive base fabric layer 2 is not particularly limited. Any of various fabric materials can be used for the base fabric 4. For example, a base material usable as the base fabric 4 is a well-known fiber material such as a polyester fiber. A surface of the base material has been plated or coated with metal such as copper (Cu) or nickel (Ni).

The electroconductive base fabric layer 2 constituted by the base fabric 4 made of a fabric material has a porous structure in which a plurality of voids (not illustrated) are formed inside the base fabric 4. For this reason, when by a forming-processing technique such as calender forming, the electroconductive rubber 5 is stuck to the base fabric 4 while being pressurebonded to the base fabric 4 so as to form the electroconductive rubber layer 3, a part of the stuck electroconductive rubber 5 enters the voids of the base fabric 4. As a result, the part of the electroconductive rubber 5 is mixed into the voids inside the base fabric 4.

Thereby, the electroconductive rubber layer 3 formed on a side of the first electroconductive base fabric layer surface 2a and the electroconductive base fabric layer 2 are electrically connected to each other. Thus, an increase in an electric resistance value of an electrode face of the electroconductive rubberized fabric 1 is suppressed. Thereby, satisfactory electroconductivity is maintained, and the problem at the time of detecting a biosignal is prevented.

The electroconductive rubber 5 is that conventionally used in a well-known electroconductive rubberized fabric. Examples of the electroconductive rubber 5 include electroconductive silicone rubber whose base material is silicone rubber, and electroconductive urethane rubber whose base material is urethane rubber.

The electroconductive rubber 5 may be formed as follows. Electroconductive carbon particles of carbon black, graphite, or the like, and silver paste, silver powder, or the like are appropriately mixed with a base material such as silicone rubber, and are kneaded. Then, the mixture is forming-processed so as to have a desired size, using a predetermined rubber forming technique (a direct pressure forming technique, a direct pressure injection technique, an injection forming technique, or the like). Thereby, the sheet-shaped electroconductive rubber 5 imparted with electroconductivity is formed.

A mixed ratio of the electroconductive carbon particles and the like to the base such as silicone rubber or urethane rubber in the mixture that can be used here is not particularly limited. The mixed ratio is in a range from 10% by weight to 70% by weight, for example, and is more preferably in a range from 20% by weight to 50% by weight.

An electroconductive material included in the base fabric 4 used for the electroconductive base fabric layer 2 is, for example, an electroconductive metal material such as silver or copper. The electroconductive material is one that can be coated, by metal plating or the like, on a material surface (fiber surface) of a polyester fiber as a base of the base fabric 4.

Similarly to the electroconductive rubber 5, a mixture used for the base fabric 4 may be one in which 50 to 500 parts by weight for example, more preferably 100 to 300 parts by weight of electroconductive carbon particles and the like are mixed with 100 parts by weight of a base material (silicone rubber or the like) as a base. This mixture may be coated on a surface of any of various fabric materials constituting the base fabric 4, or may be kneaded into the fabric material (fiber). Thus, the base fabric 4 may be obtained.

The electroconductive rubberized fabric 1 according to the embodiment includes the electroconductive base fabric layer 2 formed of the electroconductive base fabric 4, and the electroconductive rubber layer 3 formed of the electroconductive rubber 5. Each of the electroconductive base fabric layer 2 and the electroconductive rubber layer 3 has electroconductivity. Thus, an increase in an electric resistance value can be suppressed as compared with a conventional two-layer structure electroconductive rubberized fabric in which a base fabric is formed of an insulating material. Particularly, the electroconductive base fabric layer 2 has the porous structure, and thus, a part of the electroconductive rubber 5 can be mixed thereinto. Thereby, electrical connection between the electroconductive rubber layer 3 and the electroconductive base fabric layer 2 is secured, and satisfactory electroconductivity of the entire electroconductive rubberized fabric 1 is secured. For this reason, the electroconductive rubberized fabric 1 can be favorably used as a bioelectrode.

The number of metal terminals connected to a bioelectrode can be minimized. The aesthetic appearance is not impaired. Further, the influence on steerability and the like can be suppressed.

Providing the electroconductive rubber layer 3 achieves superior wear resistance, and enables repeated use. As a result, the electroconductive rubberized fabric 1 can be favorably used as a sensor attached to a steering wheel or the like. Further, manufacturing cost can be reduced, while a manufacturing process at the time of manufacturing the electroconductive rubberized fabric 1 can be prevented from being complicated, and a decline in manufacturing efficiency is suppressed. For this reason, the electroconductive rubberized fabric can be favorably used particularly as a bioelectrode.

### [Example]

The following describes the present disclosure in more detail, based on the example. However, the present disclosure is not limited to this example. Various modifications and improvements other than the following example can be adopted based on knowledge of those skilled in the art without departing from the essence of the present disclosure.

### (1) Used Members and Use Conditions of Electroconductive Paste Material

Electroconductive base fabric: polyester fiber base and electroconductive material (Cu and Ni), woven fabric
Electroconductive rubber: electroconductive silicone rubber
Electroconductive paste material: silver-powder-dispersed silicone rubber

Table 1 represents respective electric resistance values (surface resistance values) of the electroconductive base fabric (base fabric) and the electroconductive silicone rubber. The electric resistance values were each measured in a state where a distance between terminals was set at 90 mm. Table 1 also represents an electric resistance value of the electroconductive paste material (silver-dispersed silicone rubber) used in the comparative example 2.

**[Table 1]**

| Used member | Surface resistance value |
|---|---|
| Electroconductive silicone rubber | 420 Ω |
| Electroconductive base fabric | 0.40 Ω |
| Electroconductive paste material (silver and silicone rubber) | 1.00 Ω |

It is indicated from the measurement results of the electric resistance values in Table 1 that the electric resistance value of the electroconductive base fabric is lower than that of the electroconductive silicone rubber.

### (2) Fabrication of Electroconductive Rubberized Fabrics of Example 1 and Comparative Examples 1 and 2

Electroconductive rubberized fabrics of the example 1 and the comparative examples 1 and 2 were fabricated, using the above-described used members. The electroconductive base fabric including the polyester fiber as the base and the electroconductive rubber having been forming-processed in a sheet shape were stuck to each other, and were heated and pressed between rolls. Thereby, the two-layer structure electroconductive rubberized fabric 1 of the example 1 constituted by the electroconductive base fabric layer 2 and the electroconductive rubber layer 3 was fabricated (refer to FIG. 1 and FIG. 2). Since the forming method by the calender-forming processing is well known, detailed description thereof is omitted here.

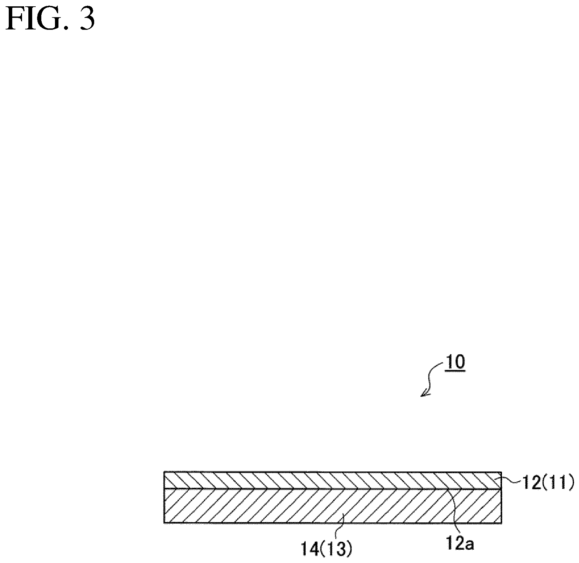

The electroconductive rubberized fabric 10 was fabricated as the comparative example 1 by calender-forming processing similar to that described above, for comparison with the example 1. An insulating base fabric 11 used at this time includes a polyester fiber as a base, and does not include an electroconductive material. The thus-fabricated electroconductive rubberized fabric 10 is constituted by a base fabric layer 12 formed of the base fabric 11, and an electroconductive rubber layer 14 formed of electroconductive rubber 13 that contacts against a first base fabric layer surface 12a (refer to FIG. 3).

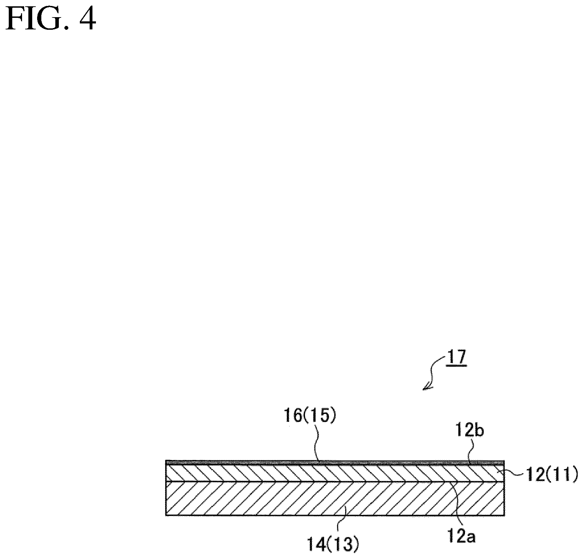

Further, the electroconductive paste material 15 listed as the used member was formed on the entirety of a second base fabric layer surface 12b in the base fabric 12 and opposite to the electroconductive rubber layer 14 in the electroconductive rubberized fabric 10 fabricated as the comparative example 1. Here, the electroconductive paste material 15 was coated, using a squeegee and screen printing, so as to be thin and uniform, and was dried for the predetermined time to be cured. Thereby, an electroconductive paste layer 16 was formed. The thus-fabricated three-layer structure electroconductive rubberized fabric 17 is the comparative example 2 (refer to FIG. 4).

### (3) Method for Measuring Electric Resistance Value

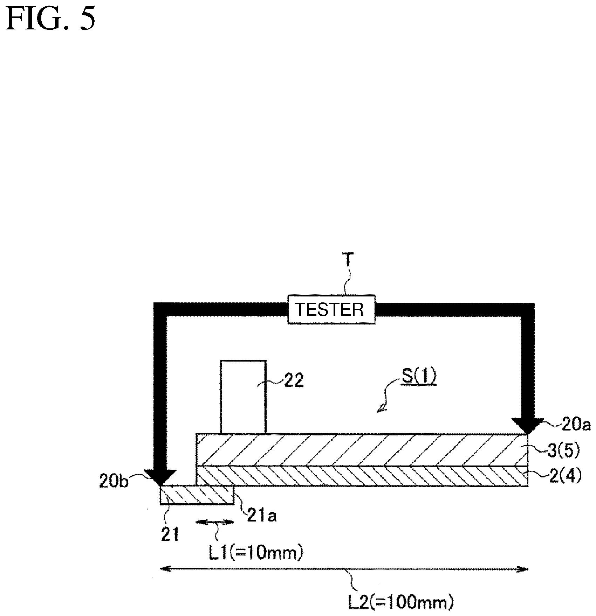

Electric resistance values were measured for the electroconductive rubberized fabrics of the example 1 and the comparative examples 1 and 2, by a measurement method schematically illustrated in FIG. 5. Here, the electric resistance values were measured using the tester T (model name: CD772) made by Sanwa Electric Instrument Co., Ltd. and having the maximum rated input of 40 MΩ.

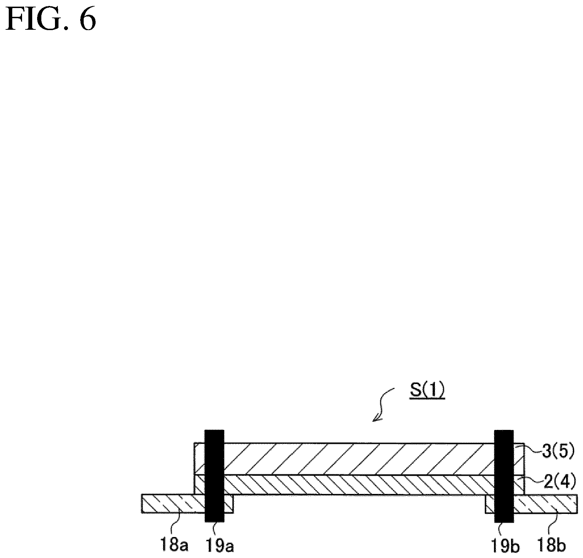

A measurement-target sample S constituted by the elongated-body electroconductive rubberized fabric is fixed to wirings 18a and 18b by electroconductive members 19a and 19b formed of electroconductive materials, in the measurement of an electric resistance value, as illustrated in FIG. 6. In the case of the example 1, the sample S needs to be electrically connected to the wiring 18a and the like on a side of the electroconductive base fabric layer 2. In the case of the comparative example 1, the sample S needs to be electrically connected to the wiring 18a and the like on a side of the base fabric layer 12. In the case of the comparative example 2, the sample S needs to be electrically connected to the wiring 18a and the like on a side of the electroconductive paste layer 16. For this reason, the electric resistance value measuring method illustrated in FIG. 5 is adopted. Here, FIG. 5 illustrates the method for measuring an electric resistance value of the electroconductive rubberized fabric 1 of the example 1. FIG. 6 exemplifies a wiring method for the electroconductive rubberized fabric 1 of the example 1.

The tester T is arranged. A first terminal 20a connected to the tester T is connected to one end (on a right side in FIG. 5) of the sample S. Further, a second terminal 20b connected to the tester T is connected to one end (on a left side in FIG. 5) of an aluminum foil 21. The aluminum foil 21 extends from the second terminal 20b toward the first terminal 20a (from the left side to the right side in FIG. 5).

The aluminum foil 21 is covered with the sample S from above in a range of a sample close-contact section L1 having a length of 10 mm from a distal end 21a of the aluminum foil. Thereby, the electroconductive aluminum foil 21 closely contacts with a part of the measurement-target sample S. A weight 22 is placed on the sample S from above in order to maintain the close contact state at the time of the measurement. Thus, the close contact between the sample S and the aluminum foil 21 is fixed.

Here, a distance (terminal-to-terminal distance L2) between the first terminal 20a and the second terminal 20b connected to the tester T is set so as to be 100 mm.

An electric resistance value of each of the samples S (the example 1 and the comparative examples 1 and 2) was measured in such a measurement method for an electric resistance value, as follows. The sample S was set at a predetermined position. Then, an electric resistance value was measured three times by the tester T. An average value thereof was calculated. The results are represented in Table 2.

**[Table 2]**

| | Electroconductive rubber layer | Base fabric | Layer structure | Electric resistance value |
|---|---|---|---|---|
| Example 1 | Electroconductive silicone rubber | Electroconductive base fabric | Two-layer structure | 26.3 S2 |
| Comparative Example 1 | Electroconductive silicone rubber | Insulating base fabric | Two-layer structure | 70 to 80 kΩ |
| Comparative Example 2 | Electroconductive silicone rubber | Insulating base fabric | Three-layer structure (with electroconductive paste layer) | 50 to 70 Ω |

### (4) Conclusion of Measurement Results

As indicated in the measurement results of an electric resistance value in Table 2, the electric resistance value of the electroconductive rubberized fabric of the example 1 including the electroconductive base fabric layer is remarkably lower than that of each of the electroconductive rubberized fabric of the comparative example 1 that does not include an electroconductive base fabric layer and the three-layer structure electroconductive rubberized fabric of the comparative example 2. This demonstrates an advantageous effect that the electroconductive rubberized fabric according to the present disclosure suppresses an increase in an electric resistance value.

The electroconductive rubberized fabric fabricated using the electroconductive base fabric (base fabric) constituted by a woven fabric is described above as the example 1. However, a fabric material constituting the electroconductive base fabric can be appropriately changed depending on various conditions such as the case of using electroconductive rubber including a urethane rubber base. In other words, using a coarse fabric material such as a knitted fabric or a mesh fabric enables calender-forming processing depending on a material viscosity of electroconductive rubber. Table 3 represents examples (reference examples 1 to 7) of various fabric materials (fabric types) that can be used for the electroconductive base fabric of the electroconductive rubberized fabric according to the present disclosure. Table 3 also represents respective electric resistance values (surface resistance values) of the electroconductive base fabrics constituted by these.

**[Table 3]**

| | Fabric type (fabric material) | Base fabric | Electroconductive material | Thickness | Electric resistance value |
|---|---|---|---|---|---|
| Reference example 1 | Knitted | Polyester fiber | Cu and Ni | 200 µm | 0.04 S2 |
| Reference example 2 | Mesh | Polyester fiber | Cu and Ni | 45 µm | 0.30 Ω |
| Reference example 3 | Woven | Polyester fiber | Cu and Ni | 30 µm | 0.08 Ω |
| Reference example 4 | Woven | Polyester fiber | Cu and Ni | 110 µm | 0.04 Ω |
| Reference example 5 | Nonwoven | Polyester fiber | Cu and Ni | 70 µm | 5 Ω |
| Reference example 6 | Nonwoven | Polyester fiber | Cu and Ni | 250 µm | 0.04 Ω |
| Reference example 7 | Nonwoven | Polyester fiber | Cu and Ni | 600 µm | 0.03 Ω |

The electroconductive base fabric of the reference example 3 in Table 3 is the one used as the base fabric of the example 1. The electroconductive base fabric of the reference example 1 has the largest voids (gaps). Following this, a void size decreases from that of the reference example 2 to that of the reference example 7. The above-described electroconductive base fabrics can be each used as the electroconductive base fabric layer in the electroconductive rubberized fabric according to the present disclosure.

As described above, it is confirmed that the electroconductive rubberized fabric according to the present disclosure outstandingly suppresses an increase in an electric resistance value on an electrode face by including the electroconductive base fabric layer formed of the electroconductive base fabric. Thus, it is indicated that the electroconductive rubberized fabric according to the present disclosure can be favorably used as a bioelectrode for accurately detecting a weak biosignal.

### INDUSTRIAL APPLICABILITY

The electroconductive rubberized fabric according to the present disclosure can be favorably used as a bioelectrode for detecting a biosignal, in any of various electronic devices whose examples include medical devices such as an electroencephalograph, wearable information devices such as an activity amount meter, and on-vehicle devices.

### Reference Signs List

1, 10, 17: Electroconductive rubberized fabric
2: Electroconductive base fabric layer
2a: First electroconductive base fabric layer surface
3, 14: Electroconductive rubber layer
4, 11: Base fabric
5, 13: Electroconductive rubber
12: Base fabric layer
12a: First base fabric layer surface
12b: Second base fabric layer surface
15: Electroconductive paste material
16: Electroconductive paste layer
18a, 18b: Wiring
19a, 19b: Electroconductive member
20a: First terminal
20b: Second terminal
21: Aluminum foil
21a: Distal end of aluminum foil
22: Weight
L1: Sample close-contact section
L2: Distance between terminals
S: Sample
T: Tester

## Claims

1. An electroconductive rubberized fabric comprising:
an electroconductive base fabric layer formed of an electroconductive base fabric and including a first electroconductive base fabric layer surface; and
an electroconductive rubber layer formed by superimposing electroconductive rubber on the first electroconductive base fabric layer surface.

2. The electroconductive rubberized fabric according to claim 1, wherein the electroconductive rubber is stuck to the base fabric by calender forming such that the electroconductive base fabric layer and the electroconductive rubber layer are formed integrally with each other.

3. The electroconductive rubberized fabric according to claim 1 or 2,
wherein the base fabric is a fabric material that is any one of a knitted fabric, a mesh fabric, a woven fabric, and a nonwoven fabric, and
an electroconductive material is coated on a material surface of the fabric material, or is kneaded into the fabric material.

4. The electroconductive rubberized fabric according to any one of claims 1 to 3,
wherein the base fabric has a porous structure including a plurality of voids inside, and
a part of the electroconductive rubber is mixed into the voids.

5. The electroconductive rubberized fabric according to any one of claims 1 to 4,
wherein the base fabric is formed so as to include a polyester fiber as a base.
